# EUROPÄISCHE PATENTSCHRIFT

(11) **EP 0 687 363 B1**
(45) Veröffentlichungstag und Bekanntmachung des Hinweises auf die Patenterteilung: **17.03.2004**
(21) Anmeldenummer: 95903248.3
(22) Anmeldetag: 16.12.1994
(51) Int. Cl.: G01R 31/28

(54) **VERFAHREN ZUR PRÜFUNG VON ELEKTRONISCHEN STEUERGERÄTEN**
PROCESS FOR TESTING ELECTRONIC CONTROLLERS
PROCEDE DE CONTROLE D'APPAREILS ELECTRONIQUES DE COMMANDE

(30) Priorität: 04.01.1994 DE 44000790 F
(43) Veröffentlichungstag der Anmeldung: 20.12.1995
(73) Patentinhaber: ROBERT BOSCH GMBH, 70442 Stuttgart (DE)
(72) Erfinder: MATT, Peter, D-72116 Mössingen (DE); SCHMID, Roland, D-72581 Dettingen (DE); WALTER, Gerold, D-72768 Reutlingen (DE); JORDAN, Mark-John, Dunfermline, Fife KY11 4TD (GB)
(86) Internationale Anmeldenummer: PCT/DE1994/001516
(87) Internationale Veröffentlichungsnummer: WO 1995/018976

(56) Entgegenhaltungen:
- DE-A- 3 540 599
- DE-A- 3 935 144
- DE-C- 3 927 921
- US-A- 5 077 671

## Beschreibung

### Stand der Technik

Die Erfindung geht aus von einem verfahren zur Prüfung von elektronischen Steuergeräten nach der Gattung des Hauptanspruchs. Es ist schon ein Verfahren zur Prüfung von elektronischen Steuergeräten aus der DE 39 35 144 C2 bekannt. Dabei sind mehrere elektronische Steuergeräte in einem Kraftfahrzeug eingebaut. Die elektronischen Steuergeräte werden für die Prüfung über einen Kommunikationsbus mit einer externen Diagnoseeinheit verbunden. Dabei sind in den verschiedenen elektronischen Steuergeräten unterschiedliche Datenübertragungsprotokolle, wie asynchrone, serielle Datenübertragung und synchrone, serielle Datenübertragung für die Kommunikation mit der externen Diagnoseeinheit realisiert. Die einzelnen elektronischen Steuergeräte weisen hierfür entsprechend angepaßte Sende- und Empfangsschaltungen auf.

Damit die externe Diagnoseeinheit mit den einzelnen Steuergeräten kommunizieren kann, weist diese unterschiedliche Kommunikationsschaltungen auf. Für die Prüfung der elektronischen Steuergeräte wird über die Tastatur der externen Diagnosegeräte eine bestimmte Kommunikationsschaltung ausgewählt. Über die entsprechend ausgewählte Kommunikationsschaltung werden dann Anforderungssignale zu den elektronischen Steuereinheiten gesendet. Diejenigen elektronischen Steuergeräte, die die Anforderungssignale entsprechend ihres Datenübertragungsprotokolls richtig empfangen, senden dann bestimmte Daten an die externe Diagnoseeinheit zurück. Nachfolgend findet dann die Überprüfung dieser elektronischen Steuergeräte in einer bestimmten Reihenfolge statt. Dazu werden über die externe Diagnoseeinheit an eine elektronische Steuereinheit bestimmte Prüfbefehle gesendet, die in der elektronischen Steuereinheit empfangen werden und zur Ausgabe bestimmter Diagnosedaten von seiten des jeweiligen elektronischen Steuergerätes führen. Die empfangenen Daten werden auf einem Display der externen Diagnoseeinheit angezeigt.

### Vorteile der Erfindung

Das erfindungsgemäße Verfahren mit den kennzeichnenden Merkmalen des Hauptanspruchs hat demgegenüber den Vorteil, daß das Programmodul für die Prüfung so ausgelegt ist, daß es Datenschreiboperationen und/oder Datenleseoperationen im elektronischen Steuergerät ausführen kann und daß die einzelnen Datenschreiboperationen und/oder Datenleseoperationen durch jeweils einen Prüfbefehl, der von dem externen Prüfgerät an das Steuergerät übertragen wird, ausgelöst werden. Dadurch ist die Prüfung sehr flexibel. Mit Hilfe des Programmoduls für die Prüfung kann das externe Prüfgerät gezielt auf die CPU-Register und/oder Speicherplätze des Prüflings zugreifen. Die Reihenfolge der Prüfschritte liegt allein in der Hand des externen Prüfgeräts. Sie ist nicht, wie bei herkömmlichen Diagnoseprogrammen, im wesentlichen fest vorgegeben. Das Programmodul ist für alle Steuergeräte verwendbar, die den gleichen Mikrorechner aufweisen.

Weiterhin vorteilhaft ist, daß sehr leicht eine Funktionsprüfung des Steuergerätes bei der Produktion des Steuergerätes am Band möglich ist, die unabhängig von eventuell zusätzlich in einem EPROM abgespeicherten Diagnosemodulen ist, die später für den Normalbetrieb des elektronischen Steuergerätes vorgesehen sind. Hierdurch kann insbesondere die Prüfzeit reduziert werden, da eventuell im Diagnosemodul vorgesehene Filterzeiten nicht abgewartet werden müssen. Ebenfalls vorteilhaft ist, daß das gleiche externe Prüfgerät für viele unterschiedliche Steuergerätetypen verwendet werden kann. Es brauchen dann nur jeweils angepaßte Programmodule für die Prüfung der verschiedenen elektronischen Steuergeräte entwickelt werden, die dann über das gleiche externe Prüfgerät zu den elektronischen Steuergeräten übertragen werden können. Ein weiterer Vorteil ist, daß der Speicherteil, der als flüchtiger Speicher ausgeführt ist, in den vom Mikrorechner ausführbare Programme einlesbar sind, klein ausgelegt werden kann, so daß die Herstellungskosten für das Steuergerät verringert sind. Als zusätzlicher Vorteil ergibt sich daraus, daß die Übertragungsdauer für die Übertragung des Programmoduls für die Prüfung in diesem Fall sehr gering sein kann, da das Programmodul insgesamt nur einen geringen Speicherplatz benötigt.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß durch die Datenschreiboperationen bestimmte Register des Mikrorechners im Steuergerät definiert gesetzt werden, so daß an bestimmten Ausgängen des Steuergerätes bestimmte Ausgangssignale erzeugt werden. Dadurch kann auf einfache Weise ein Ausgangssignal erzeugt werden, das von außen mit Hilfe von entsprechenden Meßgeräten erfaßt werden kann.

Ebenfalls vorteilhaft ist, daß bei einer Datenleseoperation die Inhalte bestimmter Register und/oder Speicherplätze von dem Mikrorechner im elektronischen Steuergerät gelesen werden und an das externe Prüfgerät übertragen werden. Die Eingangsschaltungen des elektronischen Steuergerätes werden so einfach getestet, weil nämlich die an bestimmte Eingänge des Steuergerätes anliegenden Signale vom Steuergerät in eine Binärzahl umgewandelt werden, die dann in einem Register oder auf einem bestimmten Speicherplatz des Steuergerätes abgelegt werden.

Darüber hinaus ist es vorteilhaft, daß in das Programmodul für die Prüfung ein Programmodul für ein serielles Datenübertragungsprotokoll integriert wird, so daß nach dem Start des Programmoduls für die Prüfung die Datenübertragung zwischen externem Prüfgerät und elektronischem Steuergerät nach dem seriellen Datenübertragungsprotokoll des Programmoduls stattfinden kann. Dies hat den Vorteil, daß die Datenkommunikation zwischen elektronischem Steuergerät und externem Prüfgerät unabhängig von eventuell schon im elektronischen Steuergerät festgelegten kundenspezifischen Datenübertragungsprotokollen stattfinden kann.

Weiterhin vorteilhaft ist, daß als serielles Datenübertragungsprotokoll für das Programmodul für die Prüfung ein Protokoll für eine taktsynchrone Kommunikation zwischen externem Prüfgerät und elektronischem Steuergerät verwendet wird. Dadurch kann die Datenübertragung sehr schnell und sicher stattfinden. So kann z. B. leicht eine Datenübertragungsrate von 800 kBaud realisiert werden. Durch dieses serielle Datenübertragungsprotokoll wird dann auch die Prüfzeit weiter reduziert.

Weiterhin vorteilhaft ist, daß das elektronische Steuergerät für die Prüfung mit einer externen Beschaltung versehen wird, durch die bestimmte Ausgänge des Steuergerätes auf bestimmte Eingänge des Steuergerätes zurückgeführt werden. Dadurch kann insbesondere der Aufwand für das externe Prüfgerät gering gehalten werden, weil auf diese Weise Meßgeräte, die die Ausgangssignale des Steuergerätes während des Tests erfassen, entfallen können.

Ebenfalls vorteilhaft ist, daß zwischen Prüfrechner und elektronischem Steuergerät eine vom Prüfrechner steuerbare Interface-Schaltung geschaltet wird, über die Signale auf bestimmte Eingänge des Steuergerätes ausgebbar sind. Hierdurch können besondere Signale für die Prüfung, wie z. B. bestimmte periodische Signale an die Eingänge des Steuergerätes einfach angelegt werden. Die Interface-Schaltung kann dann über eine Einsteckkarte mit dem externen Prüfgerät verbunden werden, so daß das externe Prüfgerät z. B. als einfacher Personalcomputer ausgelegt sein kann. Dadurch werden die Kosten für das externe Prüfgerät weiterhin reduziert.

### Zeichnung

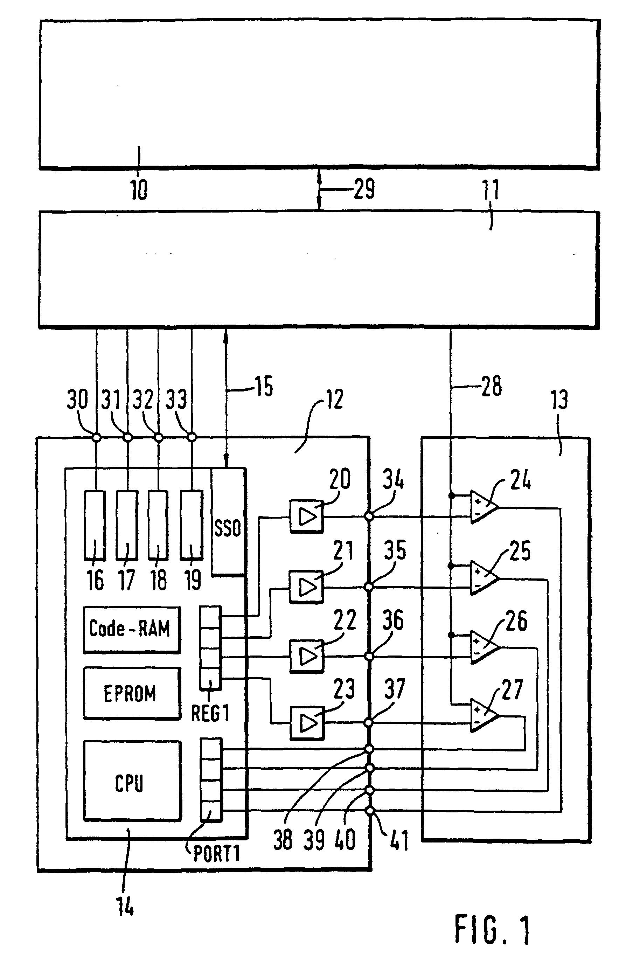

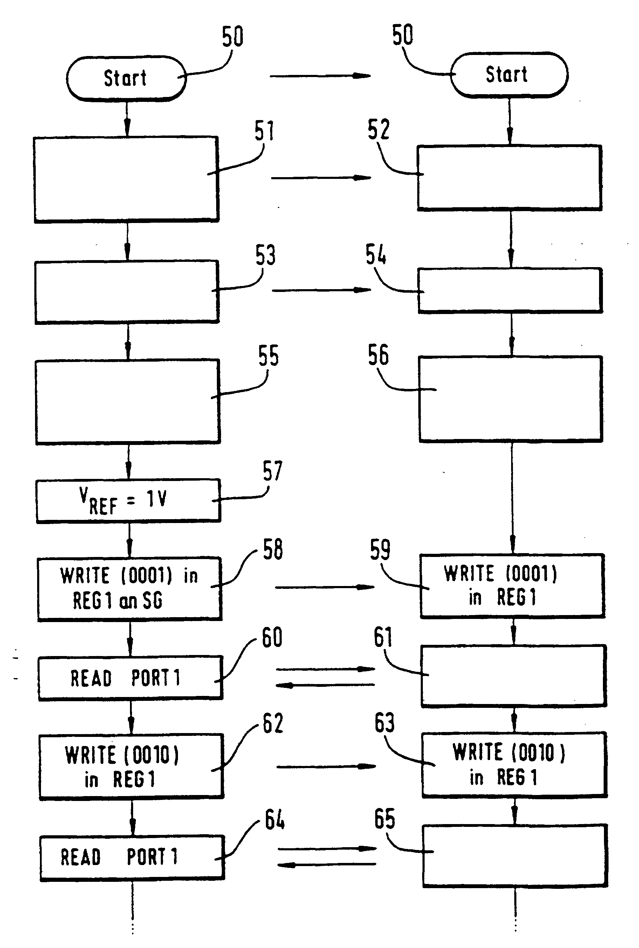

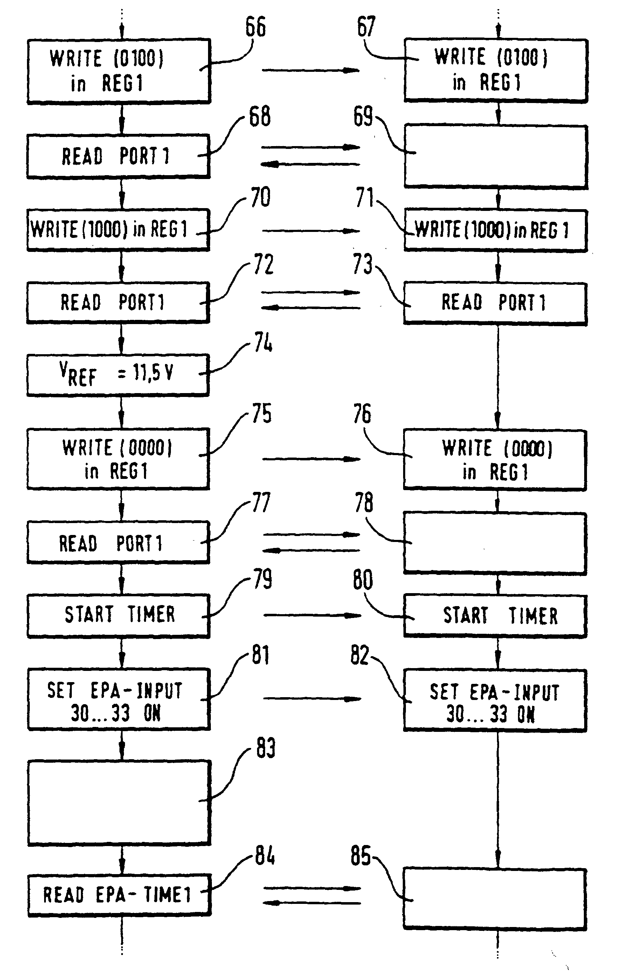

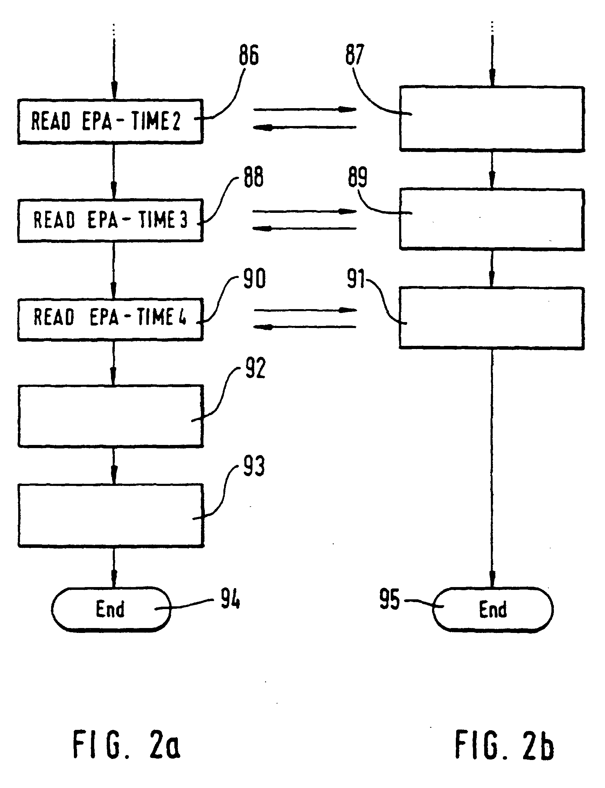

Ein Ausführungsbeispiel der Erfindung ist in der Zeichnung dargestellt und in der nachfolgenden Beschreibung näher erläutert. Es zeigen Figur 1 ein Blockschaltbild einer Vorrichtung für das erfindungsgemäße Prüfverfahren; Figur 2a ein Ablaufdiagramm für den Ablauf der Prüfung für das externe Prüfgerät und Figur 2b ein Ablaufdiagramm für den Ablauf der Prüfung für das elektronische Steuergerät.

### Beschreibung der Erfindung

Die Erfindung bezieht sich auf ein Verfahren zur Prüfung von elektronischen Steuergeräten. Derartige elektronische Steuergeräte werden z. B. im Kraftfahrzeug eingesetzt. Hierunter sind Motor-Steuergeräte, Brems-Steuergeräte, Getriebe-Steuergeräte, Klima-Steuergeräte, Leistungs-Steuergeräte usw. zu verstehen. Prüfungen von elektronischen Steuergeräten finden zu verschiedensten Zwecken statt. So müssen die Steuergeräte schon bei ihrer Herstellung auf Funktionsfähigkeit überprüft werden. Es finden aber auch später noch Prüfungen statt, nämlich wenn das Steuergerät in einem Kraftfahrzeug eingebaut ist. Auch dann wird die Funktionsfähigkeit des Steuergerätes überprüft. Dies findet in aller Regel in der Reparaturwerkstatt statt.

Im Ausführungsbeispiel ist der Fall beschrieben, daß eine Prüfung des elektronischen Steuergerätes während der Fertigung des Steuergerätes stattfindet. In diesem Stadium ist das elektronische Steuergerät zwar weitgehend fertig montiert, jedoch ist das Gehäuse des elektronischen Steuergerätes noch nicht verschlossen, so daß bestimmte Schaltungsteile des Steuergerätes noch leicht zugänglich sind. Für den Testablauf spielt das jedoch keine entscheidende Rolle, so daß die Prüfung des elektronischen Steuergerätes auch bei geschlossenem Gehäuse stattfinden kann.

Im Ausführungsbeispiel ist als elektronisches Steuergerät ein Brems-Steuergerät betrachtet. In der Figur 1 bezeichnet die Bezugszahl 12 das Brems-Steuergerät. Als zentralen Baustein enthält das Brems-Steuergerät 12 einen Mikrorechner 14. Weiterhin sind vier Treiberstufen 20 bis 23 als konkrete Bauteile des elektronischen Steuergerätes dargestellt. Weitere Komponenten des elektronischen Steuergerätes, wie Schaltrelais, Signalverarbeitungsstufen für bestimmte Eingangssignale des Steuergerätes usw. sind im einzelnen der Einfachheit halber nicht mehr dargestellt. Der Mikrorechner 14 enthält eine CPU, ein EPROM, ein Code-RAM, eine serielle Schnittstelle SSO, vier Spezialregister 16 bis 19, ein Ausgaberegister REG1 und ein Eingaberegister PORT1. Natürlich sind noch weitere Register im Mikrorechner 14 enthalten, jedoch sind diese der Übersichtlichkeit halber nicht mehr dargestellt worden. Das Code-RAM weist als Besonderheit auf, daß der Befehlszähler der CPU die Speicherstellen des Code-RAMs adressieren kann, so daß ein Programm, das im Code-RAM abgespeichert ist, von der CPU ausgeführt werden kann. Oftmals ist in einem elektronischen Steuergerät ebenfalls ein flüchtiger Speicher (RAM) eingesetzt, der jedoch nicht die genannte Besonderheit aufweist. In einem solchen Fall können in dem flüchtigen Speicher (RAM) lediglich Daten eingetragen werden, auf die das Steuerprogramm, das sich dann im EPROM befindet, zur Berechnung der Steuergrößen zurückgreifen kann. Insbesondere werden in einen solchen Speicher (RAM) Zwischenergebnisse von Berechnungen eingetragen.

Die Spezialregister 16 bis 19 sind Teil einer Ein-Ausgabeschaltung, die auch als Event Prozessor Array (EPA) bezeichnet wird. Diese Ein- Ausgabeschaltung ermöglicht die Zählung von Ereignissen, wie z. B. das Auftreten einer fallenden oder steigenden Flanke und die Zeitmessung zwischen zwei Ereignissen. Damit können also beliebige digitale Signale erfaßt und ausgewertet werden. In einer weiteren Betriebsart können mit Hilfe der Ein- Ausgangsschaltung auch beliebige digitale Signale generiert werden und über einen Ausgang des Mikrorechners abgegeben werden. Dieser Betriebsfall wird jedoch bei dem hier beschriebenen Ausführungsbeispiel nicht ausgenutzt. Die Spezialregister 16 bis 19 sind daher mit Eingängen 30 bis 33 des Steuergerätes 12 verbunden. wenn das Brems-Steuergerät 12 im Kraftfahrzeug eingebaut wird, werden an diese Eingänge 30 bis 33 Raddrehzahlsensoren angeschlossen. Jeder Registerplatz des Ausgaberegisters REG1 ist mit einer der Treiberstufen 20 bis 23 des Steuergerätes verbunden. Die Ausgänge der Treiberstufen 20 bis 23 stehen mit Ausgängen 34 bis 37 des Steuergerätes 12 in Verbindung. Die Treiberstufen 20 bis 23 dienen im Normalbetrieb des Brems-Steuergerätes 12 für die Ansteuerung von Magnetventilen, die dann den Druck in den Bremsleitungen des Kraftfahrzeuges entsprechend der abgegebenen Steuersignale variieren. Die Registerplätze des Eingaberegisters PORT1 sind mit den Eingängen 38 bis 41 des Steuergerätes 12 verbunden. An diese Eingänge können im Normalbetriebsfall des Steuergerätes 12 z. B. ein Bremskontakt-Schalter, ein Leerlaufkontakt-Schalter usw. angeschlossen sein. Sie können aber auch im Normalbetriebsfall des Steuergerätes 12 unbenutzt sein.

An die Eingänge 30 bis 33 des Steuergerätes 12 ist weiterhin eine Interface-Schaltung 11 angeschlossen. Über eine serielle Übertragungsleitung 15 ist die Interface-Schaltung 11 auch mit den Eingängen der seriellen Schnittstelle SS0 des Mikrorechners 14 verbunden. Die Interface-Schaltung 11 steht weiterhin mit einem externen Prüfgerät 10 in Verbindung. Die Verbindung zwischen Interface-Schaltung 11 und externem Prüfgerät 10 wird über eine serielle Übertragungsleitung 29 hergestellt. Das externe Prüfgerät kann dabei ein handelsüblicher Personalcomputer sein. Die Interface-Schaltung 11 besitzt ebenfalls einen Mikrorechner und Speichermittel sowie zusätzliche Schaltkreise, mit deren Hilfe z. B. die Spannungsversorgung für das angeschlossene Steuergerät 12 gesteuert wird oder auch spezielle Signale für die Eingänge 30 bis 33 des elektronischen Steuergerätes 12 erzeugt werden. Der Aufbau der Interface-Schaltung 11 ist jedoch nicht näher dargestellt, da dieser einem Prüf- und Meßtechniker an sich bekannt ist.

Für die Prüfung ist noch eine externe Beschaltung 13 an das Steuergerät 12 angeschlossen. In der externen Beschaltung 13 sind Komparatoren 24 bis 27 enthalten. Die invertierenden Eingänge der Komparatoren 24 bis 27 stehen mit den Ausgängen 34 bis 37 des Steuergerätes 12 in Verbindung. Die nicht invertierenden Eingänge der Komparatoren 24 bis 27 sind alle an eine Leitung 28 angeschlossen, die an die Interface-Schaltung 11 herangeführt ist. Die Ausgänge der Komparatoren 24 bis 27 sind über die Beschaltung 13 zu den Eingängen 38 bis 41 des Steuergerätes 12 geführt. Es können somit bei dem Test des Steuergerätes 12 Signale an die Treiberstufen 20 bis 23 vom Mikrorechner 14 abgegeben werden, die über die Komparatoren 24 bis 27 mit einer Referenzspannung verglichen werden und die Vergleichsergebnisse auf Eingänge des Steuergerätes 12 zurückgeführt werden, so daß der Mikrorechner 14 des Steuergerätes 12 die Vergleichsergebnisse aus dem Eingaberegister PORT1 entnehmen kann.

Nachfolgend wird der Ablauf der Prüfung anhand der Ablaufdiagramme in Figur 2 näher erläutert. Nachdem die Interface-Schaltung 11 und die externe Beschaltung 13 mit den entsprechenden Ein- und Ausgängen des Steuergerätes 12 verbunden wurden, gibt das externe Prüfgerät 10 einen Startbefehl 50 an das Steuergerät 12 und die Interface-Schaltung 11 ab. Dieser Befehl und auch die weiteren Befehle werden über die serielle Übertragungsleitung 15 zur seriellen Schnittstelle SS0 des Mikrorechners 14 übertragen. Nachdem der Mikrorechner 14 den Startbefehl erkannt hat, verzweigt er seinerseits zu einem Kommunikationsprogramm, das entweder im EPROM oder in einem zusätzlich gesondert vorhandenen Test-ROM des Mikrorechners 14 enthalten ist. Mit Hilfe dieses Kommunikationsprogramms ist der Mikrorechner 14 in der Lage, bestimmte Daten über die serielle Schnittstelle SS0 zu empfangen und auch zu senden. Nachdem die Prüfung eingeleitet ist, überträgt sodann das externe Prüfgerät 10 ein Programmodul für die Prüfung an das Steuergerät 12. Die Kommunikation über die serielle Übertragungsleitung 15 findet dabei nach dem Kommunikationsprogramm des Mikrorechners 14 statt, wobei eine Standard-Übertragungsrate von z. B. 9,6 kBaud verwendet wird. Der Mikrorechner 14 des Steuergerätes 12 überträgt die über die serielle Schnittstelle SS0 empfangenen Daten in das Code-RAM. Dies geschieht im Programmschritt 52 des Mikrorechners 14. Im Programmschritt 53 sendet das externe Prüfgerät einen Startbefehl für den Start des übertragenen Programmoduls an den Mikrorechner 14. Nach dem Empfang dieses Startbefehls startet sodann der Mikrorechner 14 die Abarbeitung des Programmoduls, das jetzt im Code-RAM des Mikrorechners 14 abgespeichert ist. Dies geschieht im Programmschritt 54. Das externe Prüfgerät 10 führt dann eine Initialisierung durch, während derer die serielle Schnittstelle im externen Prüfgerät 10 für synchrone Kommunikation mit dem Steuergerät umkonfiguiert wird. Dies findet im Programmschritt 55 statt. Entsprechend findet im Programmschritt 56 des Mikrorechners 14 eine Umkonfiguration der seriellen Schnittstelle SS0 statt, so daß auch diese für eine synchrone Kommunikation mit dem externen Prüfgerät 10 vorbereitet wird.

Im Programmschritt 57 gibt das externe Prüfgerät 10 einen Befehl an die Interface-Schaltung 11 ab, durch den das Referenzpotential für die Komparatoren 24 bis 27 der externen Beschaltung 13 auf 1 Volt eingestellt wird. Damit ist für die nachfolgende Prüfung das Referenzpotential für die Komparatoren 24 bis 27 auf 1 Volt festgelegt. Wenn jetzt bei der nachfolgenden Prüfung zum Test eine Treiberstufe eingeschaltet wird, so wird der angeschlossene Komparator ein High-Potential abgeben, wenn die Spannung am entsprechenden Ausgang des Steuergerätes einen Wert von 1 Volt überschreitet. Wenn stattdessen der Wert unterhalb von 1 Volt liegt, wird der entsprechende Komparator ein Low-Potential abgeben. Mit dieser Funktionsprüfung kann also das ordnungsgemäße Einschalten der Treiberstufen 20 bis 23 überprüft werden.

In dem Programmschritt 58 sendet das externe Prüfgerät 10 den Prüfbefehl "Write (0001) in REG1" an den Mikrorechner 14 des Steuergerätes 12. Dieser Befehl bewirkt, daß das binäre Zahlenwort 0001 in das Ausgaberegister REG1 eingetragen wird. Somit wird dann bei Ausführung dieses Befehls die Treiberstufe 23 des Steuergerätes 12 eingeschaltet und die Treiberstufen 20 bis 22 ausgeschaltet. Im Programmschritt 59 wird der übertragene Prüfbefehl vom Mikrorechner 14 ausgeführt. Wenn die Treiberstufe fehlerfrei ist, wird jetzt der Ausgang des Komparators 27 LOW-Potential annehmen und die Ausgänge der Komparatoren 24 bis 26 HIGH-Potential führen. Als nächsten Prüfbefehl sendet das externe Prüfgerät 10 im Programmschritt 60 den Befehl "Read PORT1" an den Mikrorechner 14. Der Befehl führt dazu, daß der Mikrorechner 14 den Inhalt des Eingaberegisters PORT1 ausliest und anschließend an das externe Prüfgerät übertragen wird. Der Befehl wird im Programmschritt 61 vom Mikrorechner 14 ausgeführt. Das externe Prüfgerät 10 speichert die empfangenen Daten in einem Speicher ab. Als nächsten Prüfbefehl sendet das externe Prüfgerät 10 den Befehl "WRITE (0010) in REG1" an den Mikrorechner 14 ab. Durch diesen Befehl wird dann die Treiberstufe 22 eingeschaltet und die anderen Treiberstufen ausgeschaltet. Der Befehl wird im Programmschritt 63 vom Mikrorechner 14 ausgeführt. Das externe Prüfgerät 10 sendet nachfolgend im Programmschritt 64 wieder den Befehl "READ PORT1" an den Mikrorechner 14 ab. Wie im Programmschritt 61 wird dieser Befehl im Programmschritt 65 vom Mikrorechner 14 ausgeführt. Der ausgelesene Speicherinhalt des Eingaberegisters PORT1 wird ebenfalls wieder auf einem Speicherplatz im externen Prüfgerät abgelegt. Nachfolgend sendet das externe Prüfgerät 10 im Programmschritt 66 den Prüfbefehl "WRITE (0100) in REG1" an den Mikrorechner 14. Durch diesen Befehl wird die Einschaltung der Endstufe 21 bewirkt und die Abschaltung aller anderen Endstufen 20, 22 und 23. Nachdem dieser Befehl im Programmschritt 67 vom Mikrorechner 14 abgearbeitet wurde, sendet das externe Prüfgerät 10 wieder den Befehl "READ PORT1" an den Mikrorechner 14. Dieser wird entsprechend des Programmschritts 61 vom Mikrorechner 14 im Programmschritt 69 abgearbeitet. Das übertragene Ergebnis wird wiederum im Speicher des externen Prüfgerätes 10 abgelegt. Im Programmschritt 70 sendet das externe Prüfgerät 10 den Befehl "WRITE (1000) in REG1". Durch diesen Befehl wird also schließlich die Treiberstufe 20 eingeschaltet und die Treiberstufen 21 bis 23 ausgeschaltet. Der Befehl wird vom Mikrorechner 14 im Programmschritt 71 ausgeführt. Im Programmschritt 72 sendet dann das externe Prüfgerät 10 erneut den Befehl "READ PORT1" an den Mikrorechner 14 ab. Daraufhin gibt der Mikrorechner 14 im Programmschritt 73 den ausgelesenen Speicherinhalt des Eingaberegisters PORT1 an das externe Prüfgerät 10 ab, welches den Speicherinhalt in einen Speicher erneut einträgt.

Im Programmschritt 74 sendet das externe Prüfgerät 10 einen Befehl an die Interfaceschaltung 11 ab, mit dem das Referenzpotential für die Komparatoren 24 bis 27 auf 11,5 Volt eingestellt werden soll. Nachdem die Interfaceschaltung 11 diesen Befehl ausgeführt hat, sendet dann das externe Prüfgerät 10 im Programmschritt 75 den Prüfbefehl "WRITE (0000) in REG1" an den Mikrorechner 14 ab. Der Befehl wird vom Mikrorechner 14 im Programmschritt 76 ausgeführt. Durch diesen Befehl werden also alle Treiberstufen 20 bis 23 ausgeschaltet. Liegt die Ausgangsspannung der Treiberstufen 20 bis 23 oberhalb von 11,5 Volt, so wird an den Ausgängen der Komparatoren 24 bis 27 ein HIGH-Potential anliegen. Liegt dagegen die Spannung eines der Treiberstufen 20 bis 23 unterhalb von 11,5 Volt, so wird stattdessen derjenige Komparator ein LOW-Potential am Ausgang führen. Im Programmschritt 77 sendet das externe Prüfgerät 10 wieder den Befehl "READ PORT1" an den Mikrorechner 14. Der Speicherinhalt des Eingaberegisters PORT1 wird erneut an das externe Prüfgerät 10 übertragen und dort im Speicher abgespeichert. Der Funktionstest der Treiberstufen 20 bis 23 ist damit beendet.

Es folgt jetzt der Test der Eingänge 30 bis 33 des Steuergerätes 12 an die die Raddrehzahlsensoren im Normalbetrieb angeschlossen werden. Im Programmschritt 79 sendet das externe Prüfgerät 10 den Befehl "Start Timer" an den Mikrorechner 14. Dieser Befehl wird vom Mikrorechner 14 im Programmschritt 80 ausgeführt. Durch diesen Befehl wird der Timer des Ein-/ Ausgabeschaltkreises (EVENT PROCESSOR ARRAY) gestartet. Als nächsten Befehl sendet das externe Prüfgerät 10 den Prüfbefehl "SET EPA-INPUT ON". Dies geschieht im Programmschritt 81. Dieser Befehl wird vom Mikrorechner 14 im Programmschritt 82 ausgeführt. Durch diesen Befehl wird eine Triggerlogik des Ein-/ Ausgabeschaltkreises der die Spezialregister 16 bis 19 enthält, so eingestellt, daß falls an den Eingängen 30 bis 33 des Steuergerätes 12 eine bestimmte Flanke (ansteigende oder fallende Flanke) erkannt wird, der aktuelle Zählerstand des Timers in das entsprechende Spezialregister eingetragen wird. Im Programmschritt 83 gibt dann die Interfaceschaltung 11 gesteuert durch das externe Prüfgerät 10 zeitversetzt eine fallende oder ansteigende Flanke an die Eingänge 30 bis 33 ab. Die entsprechende Flanke tritt also bei jedem der Spezialregister 16 bis 19 zu verschiedenen Zeitpunkten auf. Seit dem Start des Timers im Programmschritt 79 sind somit unterschiedliche Zeiten vergangen, die dann in den Spezialregistern 16 bis 19 eingetragen sein müssen. Im Programmschritt 83 sendet das externe Prüfgerät 10 den Befehl "READ EPA-TIME 1" an den Mikrorechner 14. Der Mikrorechner 14 liest den Speicherinhalt des Spezialregisters 16 aus und übersendet diesen an das externe Prüfgerät 10 im Programmschritt 85. Entsprechend sendet das externe Prüfgerät 10 im Programmschritt 86, 88 und 90 die Prüfbefehle "READ EPA-TIME 2", "READ EPA-TIME 3" und "READ EPA-TIME 4" an den Mikrorechner 14. Durch die Ausführung der Befehle 87, 89 und 91 werden also dann der Reihe nach die Speicherinhalte der Spezialregister 17 bis 19 vom Mikrorechner 14 ausgelesen und an das externe Prüfgerät 10 übertragen. Das externe Prüfgerät 10 speichert diese Werte wiederum in einem Speicher ab.

Im Programmschritt 92 findet dann die Auswertung der abgespeicherten Meßergebnisse statt. Dazu vergleicht das externe Prüfgerät 10 jedes einzelne Meßergebnis mit ebenfalls im Speicher des Prüfgerätes 10 abgelegten Sollergebnissen. Wird eine Abweichung vom externen Prüfgerät 10 erkannt, so kann eine diesbezügliche Fehlermeldung auf dem Bildschirm des externen Prüfgerätes 10 angezeigt werden oder auf einem angeschlossenen Drucker ausgedruckt werden. Dies wird dann im Programmschritt 93 geschehen. Mit dem Programmschritt 94 wird dann die Prüfung beendet. Es kann dann die Spannungsversorgung zum Steuergerät 12 abgeschaltet werden, wodurch dann auch das Programmodul im Steuergerät 12 nicht weiter abgearbeitet wird (Programmschritt 95).

Dieses Prüfkonzept wird auch als Monitorkonzept bezeichnet. Das Programmodul für die Prüfung stellt praktisch das Prüfwerkzeug für die Prüfung dar. Anders ausgedrückt stellt dieses Programmodul ein Monitorprogramm dar, mit dem beliebige Datenleseoperationen und Datenschreiboperationen im zu prüfenden elektronischen Steuergerät ausführbar sind. Mit Hilfe des Monitorprogramms wird in Analogie zu einer Programmiersprache wie Basic, in der jeder Programmbefehl einzeln interpretiert wird, praktisch eine Programmiersprache für die Prüfung von Steuergeräten zur Verfügung gestellt.

Mit dem beschriebenen Testablauf kann eine sehr genaue Funktionsprüfung des Steuergerätes 12 durchgeführt werden. Weitere Komponenten des Steuergerätes könnten ebenfalls auf eine ähnliche Art und Weise getestet werden. So könnten z. B. bestimmte Relais des Steuergerätes vom Mikrorechner 14 während des Tests angesteuert werden und die Schaltsignale ebenfalls durch die Beschaltung 13 auf Eingänge des Steuergerätes 12 zurückgeführt werden. Auch eine Überprüfung des Speicherinhaltes des EPROMs wäre leicht durchführbar. Dieser müßte sukzessiv ausgelesen werden und an das externe Prüfgerät übertragen werden.

Das dargestellte Verfahren zur Prüfung von elektronischen Steuergeräten ist nicht auf das hier beschriebene Ausführungsbeispiel beschränkt.

Das Verfahren kann auch bei anderen Steuergeräten, insbesondere Kraftfahrzeug-Steuergeräten, wie Motor-Steuergeräten, Getriebe-Steuergeräten usw. eingesetzt werden. Für einen sehr einfachen Test wäre es z. B. möglich, die Interfaceschaltung 11 einzusparen und stattdessen das externe Prüfgerät direkt über eine serielle Datenübertragungsleitung 15 mit dem Steuergerät 12 zu verbinden. Das externe Prüfgerät 10 braucht auch nicht unbedingt ein handelsüblicher Personal-Computer zu sein, sondern er könnte auch durch einen entsprechend modifizierten Diagnosetester mit Display und Tastatur ersetzt werden. Wie schon erwähnt muß die Prüfung auch nicht bei offenem Steuergerät stattfinden, sie kann stattdessen vielmehr auch bei geschlossenem Steuergerät stattfinden. Häufig weisen nämlich Steuergeräte eine Diagnoseschnittstelle auf, über die ebenfalls eine serielle Datenübertragung möglich ist. Für einen hier beschriebenen Test könnte daher auch diese Diagnoseschnittstelle verwendet werden, an die dann das externe Prüfgerät angeschlossen werden müßte. Die Datenübertragung zwischen externem Prüfgerät und Steuergerät kann dann auch seriell, asynchron stattfinden. Es ist ebenfalls möglich, einen intensivierten Test des Steuergerätes 12 dadurch durchzuführen, daß er in mehrere Abschnitte untergliedert wird, wobei für jeden Abschnitt ein dementsprechendes Programmodul in das Code-RAM des Mikrorechners 14 übertragen wird. Damit kann dann die Größe des Code-RAMs, die im Mikrorechner 14 vorgesehen sein müßte, gering gehalten werden.

## Patentansprüche

1. Verfahren zur Prüfung von elektronischen Steuergeräten (12), insbesondere Kraftfahrzeug-Steuergeräten, die einen Mikrorechner enthalten, wobei vom Mikrorechner (14) ein Programmodul für die Prüfung des Steuergerätes (12) abgearbeitet wird, wobei vom Mikrorechner (14) während der Prüfung Prüfbefehle von einem externen Prüfgerät (10) über eine serielle Schnittstelle empfangen und Daten, insbesondere Meßergebnisse und/oder Prüfergebnisse an das externe Prüfgerät gesendet werden, wobei die vom Steuergerät empfangenen Daten von dem externen Prüfgerät (10) ausgewertet und/oder angezeigt werden, **dadurch gekennzeichnet, daß** im Steuergerät (12) ein flüchtiger Speicher (Code-RAM) vorgesehen wird, in den Programme einschreibbar sind, die vom Mikrorechner (14) abgearbeitet werden, daß das Programmodul für die Prüfung zuvor über die serielle Schnittstelle (SSO) zu dem Mikrorechner (14) übertragen wird, daß das Programmodul von dem Mikrorechner (14) in den flüchtigen Speicher (Code-RAM) eingeschrieben wird und daß das Programmodul für die Prüfung so ausgelegt wird, daß es Datenschreiboperationen und/oder Datenleseoperationen im elektronischen Steuergerät (12) ausführen kann, wobei die einzelnen Datenschreiboperationen und/oder Datenleseoperationen durch jeweils einen Prüfbefehl, der von dem externen Prüfgerät (10) an das zu prüfende Steuergerät (12) gesendet wird, ausgelöst werden.

2. verfahren nach Anspruch 1, **dadurch gekennzeichnet, daß** durch die Datenschreiboperationen bestimmte Register (REG1) des Mikrorechners (14) definiert gesetzt werden, so daß an bestimmten Ausgängen (34 bis 37) des Steuergerätes (12) bestimmte Ausgangssignale erzeugt werden.

3. Verfahren nach Anspruch 1 oder 2, **dadurch gekennzeichnet, daß** bei einer Datenleseoperation die Inhalte bestimmter Register (PORT1, 16 bis 19) und/oder Speicherplätze von dem Mikrorechner (14) gelesen werden und an das externe Prüfgerät (10) übertragen werden.

4. Verfahren nach einem der vorhergehenden Ansprüche, **dadurch gekennzeichnet, daß** in das Programmodul für die Prüfung ein Programmodul für ein serielles Datenübertragungsprotokoll integriert wird, so daß nach dem Start des Programmoduls für die Prüfung die Datenübertragung zwischen externem Prüfgerät (10) und elektronischem Steuergerät (12) nach dem seriellen Datenübertragungsprotokoll des Programmoduls für die Prüfung stattfindet.

5. Verfahren nach Anspruch 4, **dadurch gekennzeichnet, daß** als serielles Datenübertragungsprotokoll ein Protokoll für eine taktsynchrone Kommunikation zwischen externem Prüfgerät (10) und elektronischem Steuergerät (12) verwendet wird.

6. Verfahren nach einem der vorhergehenden Ansprüche, **dadurch gekennzeichnet, daß** zwischen externem Prüfgerät (10) und elektronischem Steuergerät (12) eine vom externen Prüfgerät (10) steuerbare Interface-Schaltung (11) geschaltet wird, über die Signale auf bestimmte Eingänge (30 bis 33) des Steuergerätes (12) ausgebbar sind.

7. Verfahren nach einem der vorhergehenden Ansprüche, **dadurch gekennzeichnet, daß** das Steuergerät (12) für die Prüfung mit einer externen Beschaltung (13) versehen wird, durch die bestimmte Ausgänge (34 bis 37) des Steuergerätes (12) auf bestimmte Eingänge (38 bis 41) des Steuergerätes (12) zurückgeführt werden.

## Claims

1. Method for testing electronic control devices (12), in particular motor vehicle control devices, which contain a microcomputer, a program module for testing the control device (12) being processed by the microcomputer (14), it being the case that during testing the microcomputer (14) receives test instructions from an external test device (10) via a serial interface and data, in particular measurement results and/or test results are transmitted to the external test device, the data received from the control device being evaluated and/or displayed by the external test device (10), **characterized in that** there is provided in the control device (12) a volatile memory (code RAM) into which it is possible to write programs which are processed by the microcomputer (14), **in that** the program module for testing is transferred in advance to the microcomputer (14) via the serial interface (SSO), **in that** the program module is written into the volatile memory (code RAM) from the microcomputer (14), and **in that** the program module for testing is designed such that it can execute data writing operations and/or data reading operations in the electronic control device (12), the individual data writing operations and/or data reading operations being triggered in each case by a test instruction which is transmitted from the external test device (10) to the control device (12) to be tested.

2. Method according to Claim 1, **characterized in that** registers (REG1) of the microcomputer (14) which are specified by the data writing operations are set in a defined fashion such that specific output signals are generated at specific outputs (34 to 37) of the control device (12).

3. Method according to Claim 1 or 2, **characterized in that** during a data reading operation the contents of specific registers (PORT1, 16 to 19) and/or memory locations are read by the microcomputer (14) and transmitted to the external test device (10).

4. Method according to one of the preceding claims, **characterized in that** a program module for a serial data transmission protocol is integrated into the program module for testing with the result that after the start of the program module for testing the data transmission takes place between the external test device (10) and electronic control device (12) in accordance with the serial data transmission protocol of the program module for testing.

5. Method according to Claim 4, **characterized in that** use is made as the serial data transmission protocol of a protocol for synchronous communication between the external test device (10) and electronic control device (12).

6. Method according to one of the preceding claims, **characterized in that** there is connected between the external test device (10) and electronic control device (12) an interface circuit (11) which can be controlled by the external test device (10) and via which signals can be output to specific inputs (30 to 33) of the control device (12).

7. Method according to one of the preceding claims, **characterized in that** the control device (12) for testing is provided with an external circuit (13) by means of which the specific outputs (34 to 37) of the control device (12) are fed back to specific inputs (38 to 41) of the control device (12).

## Revendications

1. Procédé de contrôle d'appareils électroniques de commande (12) en particulier d'appareils de commande de véhicule automobile, qui contiennent un microcalculateur, un module de programme étant exécuté par le microcalculateur (14) pour le contrôle de l'appareil de commande (12), où, pendant le contrôle, des commandes de contrôle reçues d'un appareil de contrôle externe (10) par une interface série et des données, en particulier des résultats de mesure et/ou des résultats de contrôles sont envoyés par le microcalculateur (14) à l'appareil de contrôle externe (10), où les données reçues par l'appareil de commande sont exploitées et/ou affichées par l'appareil de contrôle externe (10),
**caractérisé en ce que**
dans l'appareil de commande (12), une mémoire volatile (code-RAM) est prévue dans laquelle des programmes sont inscriptibles qui sont exécutés par le microcalculateur (14), que le module de programme pour le contrôle est auparavant transmis au microcalculateur (14) par l'interface série (SSO), le module de programme est écrit par le microcalculateur (14) dans la mémoire volatile (code-RAM) et le module de programme pour le contrôle est conçu de manière telle qu'il puisse exécuter des opérations de lecture de données et/ou des opérations d'écriture de données dans l'appareil de commande électronique (12), chacune des opérations d'écriture de donnée et/ou des opérations de lecture de données étant chaque fois déclenchée par une commande de contrôle qui est envoyée par l'appareil de contrôle externe (10) à l'appareil de commande (12) à contrôler.

2. Procédé selon la revendication 1,
**caractérisé en ce que**
par les opérations d'écriture de données, certains registres (REG1) du microcalculateur (14) sont positionnés de manière définie, de façon à ce qu'à certaines sorties (34 à 37) de l'appareil de commande (12) certains signaux de sortie soient créés.

3. Procédé selon la revendication 1 ou 2,
**caractérisé en ce que**
lors d'une opération de lecture de données, les contenus de certains registres (PORT1, 16 à 19) et/ou des emplacements mémoire sont lus par le microcalculateur (14) et transférés vers l'appareil de contrôle externe (10).

4. Procédé selon l'une quelconque des revendications précédentes,
**caractérisé en ce que**
dans le module de programme pour le contrôle, un module de programme de protocole de transmission de données série est intégré, si bien qu'après le démarrage du module de programme de contrôle, la transmission de données entre appareil de contrôle externe (10) et appareil électronique de commande (12) selon le protocole de transmission de données série du module de programme pour le contrôle, se produit.

5. Procédé selon la revendication 4,
**caractérisé en ce que**
en tant que protocole de transmission de données série, un protocole de communication synchronisé par horloge est employé entre l'appareil de contrôle externe (10) et l'appareil électronique de commande (12).

6. Procédé selon l'une quelconque des revendications précédentes,
**caractérisé en ce que**
entre l'appareil de contrôle externe (10) et l'appareil électronique de commande (12), un circuit d'interface (11) commandable par l'appareil de contrôle (10) est raccordé, par lequel les signaux peuvent être dirigés vers certaines entrées (30 à 33) de l'appareil de commande (12).

7. Procédé selon l'une quelconque des revendications précédentes,
**caractérisé en ce que**
l'appareil de commande (12) pour le contrôle est pourvu d'une circuiterie externe (13) par laquelle certaines sorties (34 à 37) de l'appareil de commande (12) peuvent être retournées vers certaines entrées (38 à 41) de l'appareil de commande (12).
